# EUROPÄISCHE PATENTSCHRIFT

(11) **EP 4 590 484 B1**
(45) Veröffentlichungstag und Bekanntmachung des Hinweises auf die Patenterteilung: **29.10.2025**
(21) Anmeldenummer: 24754260.8
(22) Anmeldetag: 05.08.2024
(51) Int. Cl.: B29C 48/325, B29C 48/09, B29C 48/92, B29C 48/25, B29C 49/78

(54) **VORRICHTUNG UND VERFAHREN ZUM VERSTELLEN VON BAUTEILEN IN EINEM EXTRUSIONSWERKZEUG**
DEVICE AND METHOD FOR ADJUSTING COMPONENTS IN AN EXTRUSION TOOL
DISPOSITIF ET PROCÉDÉ DE RÉGLAGE DE COMPOSANTS DANS UN OUTIL D'EXTRUSION

(30) Priorität: 11.08.2023 DE 102023121541
(43) Veröffentlichungstag der Anmeldung: 30.07.2025
(73) Patentinhaber: battenfeld-cincinnati Germany GmbH, 32547 Bad Oeynhausen (DE)
(72) Erfinder: BULMAHN, Carsten, 32457 Porta Westfalica (DE); MICKLEY, Ralf, 33719 Bielefeld (DE); STIEGLITZ, Henning, 32425 Minden (DE); DOHMANN, Heinrich, 32547 Bad Oeynhausen (DE)
(86) Internationale Anmeldenummer: PCT/EP2024/072114
(87) Internationale Veröffentlichungsnummer: WO 2025/036749

(56) Entgegenhaltungen:
- EP-B1- 2 512 773
- DE-A1- 102012 111 117
- DE-C2- 3 505 837
- SU-A2- 880 779
- US-A1- 2002 136 792
- US-A1- 2005 276 876
- US-A1- 2016 271 854
- US-A1- 2022 332 032

## Beschreibung

Die Erfindung betrifft eine Vorrichtung zur Herstellung von Kunststoffrohren im Extrusionsverfahren mit einem Extruder, einem sich in Produktionsrichtung an den Extruder anschließenden Extrusionswerkzeug bestehend aus einem Grundwerkzeug einem daran anschließenden formgebenden Düseneinsatz mit mindestens einer Hülse und einem Dorn, wobei sich zwischen dem Dorn und der Hülse ein Schmelzekanal mit einem kreisförmigen Austrittsspalt bildet, wobei die Hülse relativ zum Dorn verstellbar ist. Weiterhin betrifft die Erfindung ein diesbezügliches Verfahren zum Verstellen der Hülse.

Ein Rohrextrusionswerkzeug mit Hülse und Dorn ist eine Vorrichtung, die verwendet wird, um Kunststoffrohre herzustellen. Das Grundprinzip besteht darin, dass ein geschmolzener Kunststoff durch einen Schmelzekanal gepresst wird, wobei die Hülse mit dem Dorn einen Ausgangsringspalt bilden, der die gewünschte Form des Rohrs näherungsweise abbildet.

Der Prozess beginnt mit dem Einspeisen von Kunststoffgranulat oder -schmelze in eine Extrusionsmaschine. Die Maschine schmilzt den Kunststoff und drückt ihn durch eine Schnecke oder einen Kolben in die Hülse. Die Hülse hat eine Öffnung mit näherungsweise der Form des gewünschten Rohrs.

Der geschmolzene Kunststoff wird durch Druck bedingt durch die Reibkräfte durch die Hülse gedrückt. Der Dorn wird gleichzeitig in das Innere der Hülse eingeführt, um den Hohlraum des Rohrs zu bilden. Der Dorn hat die Form des Innenraums des Rohrs und sorgt dafür, dass der Kunststoff die richtige Form annimmt.

Das Grundprinzip des Rohrextrusionswerkzeugs mit Hülse und Dorn ermöglicht die Herstellung von Kunststoffrohren in verschiedenen Größen und Formen. Es ist ein effizienter Prozess, der es ermöglicht, große Mengen an Rohren in kurzer Zeit kontinuierlich herzustellen. Es ist möglich, den Dorn in der Hülse zu verschieben. Dies ermöglicht die Herstellung von Rohren mit unterschiedlichen Durchmessern oder Wandstärken. Durch das Verschieben des Dorns kann der Abstand zwischen dem Dorn und der Hülse verändert werden, was wiederum die Größe des Hohlraums des Rohrs beeinflusst. Die genaue Einstellung des Dorns hängt von den spezifischen Anforderungen des herzustellenden Rohrs ab. Dies ermöglicht eine flexible Produktion und eine Anpassung an unterschiedliche Kundenanforderungen.

Die zentrische Lage der Hülse zum Dorn kann verändert werden, um die Eigenschaften des extrudierten Rohrs anzupassen. Eine zentrische Lage des Dorns führt zu einer gleichmäßigen Wandstärke, während eine Verschiebung der Hülse zum Dorn zu einer ungleichmäßigen Wandstärke führen kann. Die Veränderung der zentrischen Lage kann durch den Einsatz von speziellen Werkzeugen erreicht werden. Es ist wichtig, die Auswirkungen einer solchen Veränderung auf die Qualität und Eigenschaften des extrudierten Rohrs zu berücksichtigen. Dies kann vor allem beim Auftreten des sogenannten "sacking-Effekt" von Bedeutung sein. Der sacking-Effekt tritt auf, wenn die Wandstärke des extrudierten Rohrs ungleichmäßig ist und es zu einer Ausbeulung oder Absackung der Rohrwand kommt. Die Veränderung der zentrischen Lage von Hülse zum Dorn kann dazu beitragen, dem "sacking-Effekt" entgegenzuwirken. Durch eine gezielte Verschiebung der Hülse zum Dorn kann die Wandstärke des Rohrs gleichmäßiger gestaltet werden. Eine zentrische Lage des Dorns führt zu einer gleichmäßigen Wandstärke, während eine Verschiebung zu einer gezielten Anpassung der Wandstärke an bestimmten Stellen führen kann.

Durch die Veränderung der zentrischen Lage des Dorns zur Hülse kann also der sacking-Effekt minimiert oder vermieden werden, indem eine gleichmäßigere Wandstärke des extrudierten Rohrs erreicht wird.

Es gibt Extrusionswerkzeuge bei denen eine elektromotorische Verstellung vorgesehen ist, diese kann den Massespalt verstellen und damit den Austrittspalt über den kompletten Umfang gleichmäßig zu vergrößern oder zu verkleinern. Mittels manueller Zentrierschrauben ist es möglich den Schmelzeaustritt an einer Stelle größer und an der dazu gegenüberliegenden Stelle dann naturgemäß zu verkleinern.

Aus dem Stand der Technik ist sind diverse Dokumente bekannt, so offenbart z.B. die DE3505837C2 einen Spritzkopf zur Herstellung von Rohren aus thermoplastischem Kunststoff, der an eine Plastifiziereinheit anschließbar ist und einen ringförmigen Düsenspalt hat, welcher von einem ortsfest im Spritzkopfgehäuse gehaltenen Dorn und einem das nach außen gerichtete Ende des Dornes mit Abstand umschließenden, rohrförmigen Mundstück begrenzt ist, wobei sich das Mundstück über zueinander komplementäre kugelkalottenartige Lagerflächen stirnseitig am Spritzkopfgehäuse abstützt und mittels Schrauben gesichert ist und wobei außerhalb der kugelkalottenartigen Lagerung zwischen dem Spritzkopfgehäuse und dem Mundstück mehrere gleichmäßig in Umfangsrichtung verteilt angeordnete Abstützelemente angeordnet sind, über die das Mundstück zur Justierung des ringförmigen Düsenspaltes relativ zum Dorn längs der kugelkalottenartigen Lagerflächen verstellbar ist, wobei die Abstützelemente aus Exzentern bestehen, die am Spritzkopf mit großem radialem Abstand vom Außenumfang des Mundstücks verdrehbar lagern, wobei diese Exzenter mit ihrem Mantel am Umfang eines das Mundstück tragenden Ringkörpers mit radialer Verstellkraftkomponente angreifen und wobei dabei der Ringkörper mit dem Mundstück um die kugelkalottenartigen Lagerflächen winkelverlagerbar ist.

Vier baugleiche Exzenter, die mit jeweils einer Antriebsvorrichtung gekoppelt sind, können den ringförmigen Düsenspalt im Austrittsbereich einjustieren. Durch Verdrehen der Wellen für die einzelnen Exzenter lassen sich radiale Verstellkraftkomponenten auf den Ringkörper ausüben, so dass dieser entgegen der Rückstellwirkung der Federelemente zwangsweise über die kugelkalottenartigen Lagerflächen gegenüber dem Gehäuse winkelverstellt wird.

Nachteilig bei dieser Ausführung ist, dass eine Vielzahl von Bauteilen zur Verstellung erforderlich sind und die Antriebsvorrichtung nicht direkt mittels einer translatorischen Bewegung zur Verstellung des Düsenspaltes beiträgt.

Aus der US20050276876Al ist die Verstellung eines Düsenspaltes bekannt, bei der über vier Schrauben eine außenliegender Druckring aus seiner Lage verstellt wird und somit den düsenspalt verändert. Eine analoge Verstellung offenbart auch die US20220332032A1**.**

Aus der DE102012111117A1 ist ein Extrusionswerkzeug zur Erzeugung eines schlauchförmigen Vorformlings aus einer Kunststoffschmelze mit einem Dorn, einem im Düsenkörper schwenkbar gelagerten Düsenring, der den Dorn unter Bildung eines Ringspaltes umgibt, und einer Stelleinrichtung zur Kippverstellung des Düsenrings bekannt. Auch hier wird der Ringspalt über einen Kraftantrieb direkt mittels einer elastisch deformierbaren Hülse verstellt.

Die EP2512773B1 offenbart eine verstellbare Düse die einen Fließkanal zwischen dem Gehäuse und einem Kern verändern kann. Hierbei ist vorgesehen über Schrauben einen Teil des Gehäuses zum Gehäusegrundkörper zu verdrehen.

Einen Schlauchkopf zum Austragen eines Vorformlings zur Herstellung von Kapillaren, Rohren oder Rohren offenbart die US20160271854A1**.** Der Schlauchkopf umfasst ein hülsenförmiges Gehäuse, in das eine Schmelze eingespeist wird und das einen Kern umgibt, der fest in das Gehäuse eingespannt ist, so dass das Gehäuse allseitig vom Kern beabstandet ist, wobei das trifunktionelle Bauteil den Strömungskanal zwischen dem Gehäuse und der Düse abdichtet und über die trifunktionelle Komponente ein Winkel zwischen dem Gehäuse und der Düse sowie eine Kopflänge verändert werden kann. Hierfür wird eine deformierbare Düse eingesetzt.

Eine verstellbare Düse mit mehreren Austrittsspalten ist aus der SU000000880779A2 bekannt, auch hier wird der Austrittsspalt direkt über eine Schraube verändert in dem die Hülsen aus ihrer vorgegebenen Lage gekippt werden.

Die US20020136792A1 schlägt für die Ummantelung von Draht ein verstellbare Extrusionsdüse vor bei der ebenfalls der Austrittspalt über Schrauben verstellt werden kann.

**Aufgabe** der Erfindung ist es, eine Vorrichtung und ein Verfahren bereitzustellen, mittels dem die Hülse in ihrer Lage zum Dorn von außerhalb des Werkzeuges weitgehend beliebig verstellt werden kann, um den Austrittsspalt an gegebene Anforderungen anpassen zu können.

Die **Lösung** der Aufgabe ist in Verbindung mit dem Oberbegriff des Anspruches 1 dadurch gekennzeichnet, dass ein Verstellelement angeordnet ist das mit der Hülse in Wirkverbindung steht und über mindestens einen Antrieb verstellbar ist, wobei das Verstellelement mit einem Gleitblock mit einer kugelförmigen Gleitfläche in Berührung steht wobei zwischen dem Antrieb und dem Verstellelement ein Bolzen angeordnet ist, wobei der Antrieb ein elektromechanischer Antrieb ist, wobei der Antrieb ein Spindelhubgetriebe ist.

Als elektromechanischer Antrieb ist beispielsweise ein Linearantriebe oder insbesondere ein Spindelhubgetriebe vorgesehen. Vor allem die Spindelhubgetriebe haben eine große Untersetzung im sehr kompakten Bauraum. Es ist nur eine kleine Antriebsleistung erforderlich und sie sind sehr präzise da minimale Verstell-Schritte von 0,05 mm möglich sind. Weiterhin sind sehr hohe Verstell-Kräfte von ≥ 10t möglich.

Der Antrieb bewegt das Verstellelement auf dem Gleitblock und bringt so die Hülse in eine andere Position zum Dorn, wodurch der kreisförmige Austrittsspalt verändert wird. Der Antrieb bewegt dann folglich zunächst den Bolzen, in der Regel entlang einer Achse äquidistanten zur Extrusionsachse, und bewegt darüber das Verstellelement und damit die Hülse im Bezug zum Dorn.

Weiterbildungsgemäß ist vorgesehen, dass ein Federpacket zum Vorspannen des Verstellelementes vorgesehen ist. Das Federpaket, vorzugsweise eine Anzahl von hintereinander angeordneten Tellerfedern, wird mittels einer Komponente, zum Beispiel einer Innensechskantschraube, einer Vorspannung unterzogen und bring somit Verstellelement, Gleitfläche etc. in eine Ausgangslage, in der zwischen den beweglichen Teilen das naturgemäß vorhandene Spiel weitgehend eliminiert wird. Zwischen dem Verstellelement und dem Gleitblock wird so eine Schmelzedichtheit erreicht.

Mittels des Antriebes wird also das Verstellelement und damit die Hülse um den Kugelmittelpunkt des Gleitblockes entlang der kugelförmigen Gleitfläche bewegt oder gekippt. Durch diese Ausgestaltung der Vorrichtung kann die Hülse dreidimensional um diesen Punkt bewegt werden und so den Austrittsspalt angepasst werden, um die Erfordernisse des gewünschten Rohrquerschnittes zu erreichen.

Über die Maschinensteuerungen kann die aktuelle Lage bzw. der aktuelle Verfahrwege des Antriebes genau angezeigt werden. Mittels relativ einfacher Berechnung ist somit ermittelbar, wie die Hülse über den Antrieb oder die Antreibe aus ihrer Ausgangslage verstellt wurde. Ist die Verstellung der Hülse bekannt, kann auch die Geometrie des Austrittspaltes ermittelt werden. Denn wenn die Hülse zum Dorn verschoben wird, wird aus dem Kreisringquerschnitt mit gleicher Wandstärke ein Querschnitt der unterschiedliche Wandstärken aufweist. Durch diese reproduzierbaren Einstellungen ist es möglich gezielt einen Einfluss auf das zu produzierende Rohr zu nehmen.

Die L ö s u n g zum Verfahren ist in Verbindung mit dem Oberbegriff des Anspruchs 4 dadurch gekennzeichnet, dass ein Verstellelement entlang einer kugelförmigen Gleitfläche eines Gleitblockes bewegt wird, wobei ein Antrieb direkt oder indirekt gegen das Verstellelement drückt.

Wie bereits weiter oben ausgeführt bewegt der Antrieb das Verstellelement und damit die Hülse im Bezug zum Dorn.

Weitere vorteilhafte Weiterbildungen sind in den Unteransprüchen 8 bis 10 wiedergegeben.

Die vorgeschlagen Erfindung ermöglicht es die Hülse in einem Düseneinsatz zum Dorn von außen zu verstellen, wobei die Verstellung aus einer Ausgangslage erfolgt und die vorgenommene Verstellung bekannt und reproduzierbar ist.

Das hat den Vorteil, dass insbesondere bei Extrusionsanlagen mit vorherrschender Wanddickenmessung es möglich ist einen Regelkreis aufzubauen oder mittels mathematischer Modelle zu erstellen und über diesen im laufenden Prozess auf Veränderungen zu reagieren und die Hülse zum Dorn zu verstellen, damit die gewünschte Wandstärke wieder erreicht wird, um die gleichbleibende Qualität des Kunststoffrohres zu gewährleisten.

In den Zeichnungen wird schematisch eine erfindungsgemäße Vorrichtung gezeigt:
- Fig. 1: zeigt eine typische Extrusionslinie
- Fig. 2: einen Schnitt durch ein Extrusionswerkzeug mit verstellter Hülse
- Fig. 3: einen Schnitt durch ein Extrusionswerkzeug ohne verstellte Hülse
- Fig. 4: schematisch die zentrische Lage von Hülse zu Dorn
- Fig. 5: schematisch die konzentrische Lage von Hülse zu Dorn
- Fig. 6: schematisch die Lage von Hülse und Dorn im dreidimensionalen Raum
- Fig. 7: eine isometrische Darstellung des Extrusionswerkzeuges

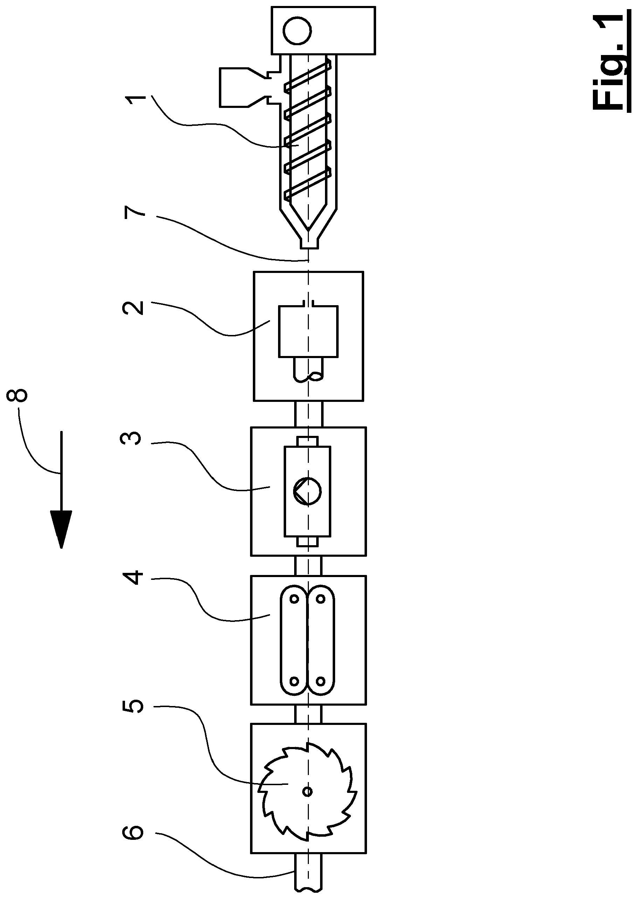

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet. Die Extrusionsachse ist mit der Positionsziffer 7 und die Extrusionsrichtung mit Positionsziffer 8 gekennzeichnet.

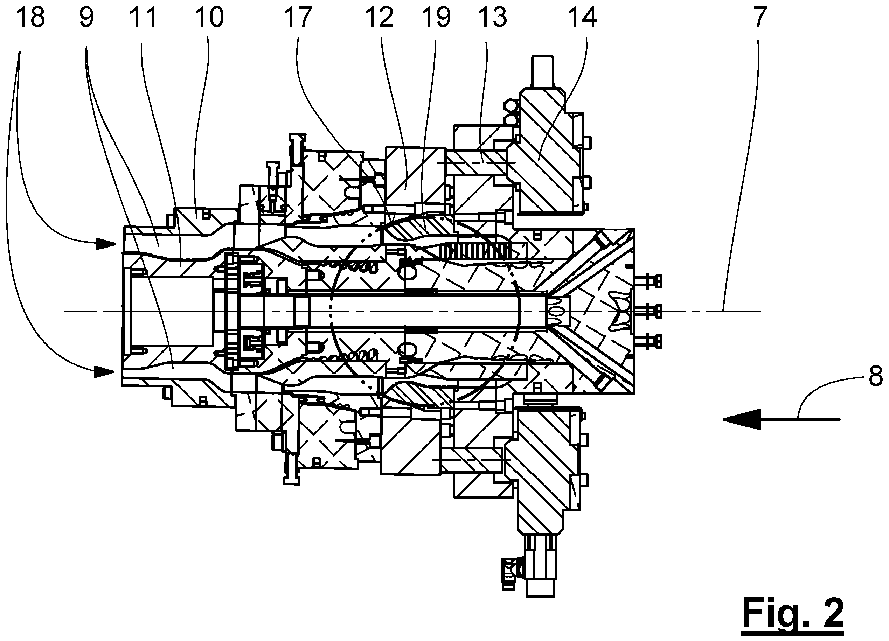

Figur 2 zeigt einen Schnitt durch ein Extrusionswerkzeug 2 mit einem Düseneinsatz bestehend aus mindestens einer Hülse 10 und einem Dorn 11. Zwischen der Innenkontur der Hülse 10 und der Außenkontur des Dornes 11 entsteht ein Schmelzekanal 9 der am Ausgang des Extrusionswerkzeuges 2 einen Austrittsspalt 18 bildet. In diesem Ausführungsbeispiel ist die Hülse 10 nach ober aus der Extrusionsachse 7 bewegt, wodurch der Schmelzekanal 9 im unteren Bereich kleiner als im oberen Bereich ist. Der Austrittsspalt 18 bildet somit keinen Ringquerschnitt mehr. Das Bewegen der Hülse 10 wird über das Verstellelement 12, mit dem sie in Wirkverbindung steht, erreicht. Antriebe 14 verschieben in diesem Ausführungsbeispiel den Bolzen 13 (der Antrieb 14 kann auch direkt auf das Verstellelement 12 wirken), was wiederum bewirkt, dass das Verstellelement 12 entlang der kugelförmigen Gleitfläche 17 des Gleitblockes 19 bewegt wird und somit die Hülse 10 kippt. Da die Gleitfläche 17 eine Kugelkalotte ist, was in einem Schnitt durch eine Kugel einen Kreis ergibt, wird durch die dicke strickgepunktete Linie verdeutlicht. Die Extrusionsrichtung ist mit Positionsziffer 8 gekennzeichnet.

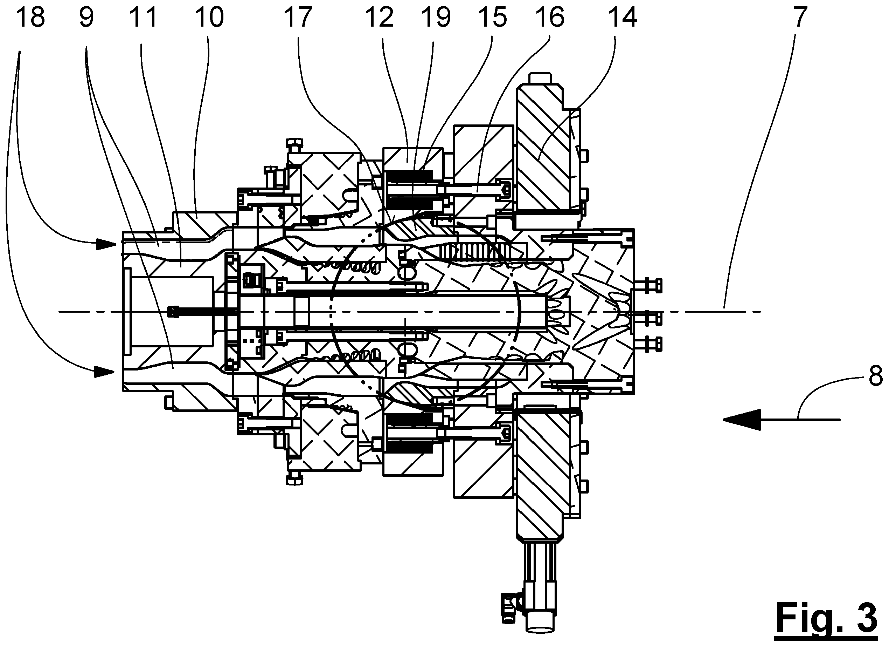

Figur 3 zeigt ebenfalls das Extrusionswerkzeug 2 gemäß Figur 2. Hier ist jedoch die Hülse 10 nicht zum Dorn 11 gekippt. Hülse 10 und Dorn 11 liegen zentrisch zueinander, wodurch der Austrittsspalt 18 als Ringquerschnitt ausgebildet ist. Dorn 11 und Hülse 10 nehmen eine Grundlage als Ausgangsstellung ein, die als Basiseinstellung angesehen werden kann. In diesem Ausführungsbeispiel sind Federpakete 15 im Verstellelement 12 angeordnet - andere Anordnungen sind denkbar - die das Verstellelement 12 in dieser Ausgangslage halten. Vorhandenes Spiel vor allem zwischen Verstellelement 12 und dem Gleitblock 19 werden durch die Federspannung eliminiert. Die Vorspannung ist dabei so gewählt, dass ein Gleiten des Verstellelementes 12 weiterhin gewährleistet ist, die kugelförmige Gleitfläche 17 aber damit schmelzedicht wird. Die Federn im Federpaket 15 können über eine Komponente zum Vorspannung 16 eingestellt werden. In diesem Ausführungsbeispiel sind die Komponenten zum Vorspannen 16 handelsübliche Innensechskantschrauben, es kann aber auch mittels anderer Elemente realisiert werden. Das Federpacket 15 besteht aus einer Mehrzahl von hintereinander gestaffelter Tellerfern. Gleiche Positionen sind wieder mit gleichen Positionsziffern benannt.

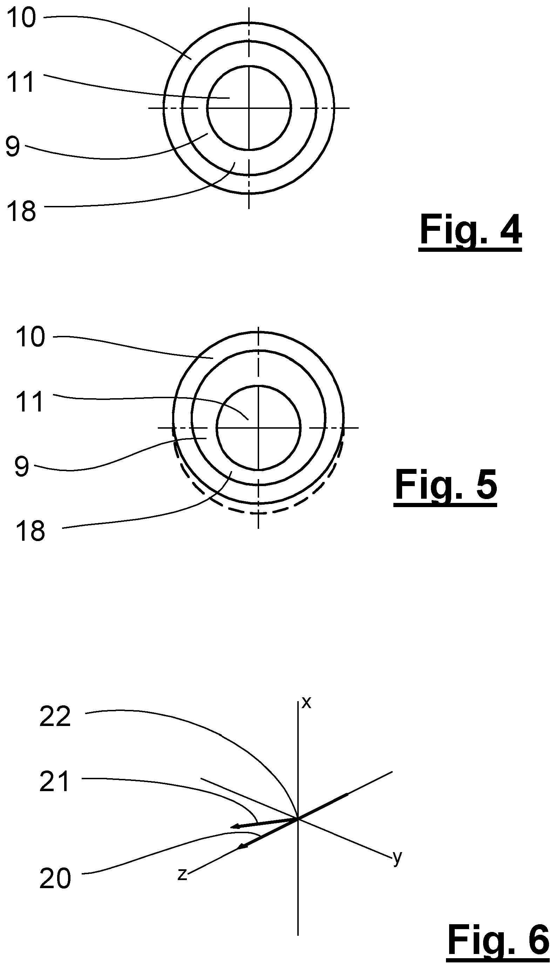

Die Figuren 4 und 5 zeigen eine schematische Prinzipskizze der Lage von Dorn 11 zur Hülse 10. In Figur 4 sind Dorn 11 und Hülse 10 zentrischen angeordnet, wodurch der Schmelzekanal 9 und der Austrittsspalt 18 einen Kreisring, respektive eine gleiche Wandstärke aufweist. In der Prinzipskizze der Figur 5 ist die Hülse 10 nach oben bewegt und somit exzentrisch dargestellt und ist somit aus seiner konzentrischen Lage verschoben. Die zentrische Lage ist zum Vergleich als gestrichelte Linie dargestellt.

Durch die kugelförmige Gleitfläche 17 ist eine Verstellung der Hüls 10 zum Dorn 11 nicht nur innerhalb einer Eben möglich, die Hülse 10 kann dreidimensional im Raum um den Mittelpunkt 22 der kugelförmigen Gleitfläche 17 verschwenkt werden. Figur 6 zeigt zur Verdeutlichung ein dreidimensionales Fadenkreuz mit den Achse x,y,z. Die Z-Achse entspricht der Extrusionsachse 8 und die Mittelachse des Dorns 11 ist schematisch als Pfeil 20 dargestellt. Pfeil 21 stellt schematisch die Mittelachse der Hülse 10 dar, die um den Mittelpunkt 22 der kugelförmigen Gleitfläche 17, die nicht nur auf der Z-Ebene in X-Richtung, sondern auch aus der Z-Ebene in Y-Richtung verschwenkt ist.

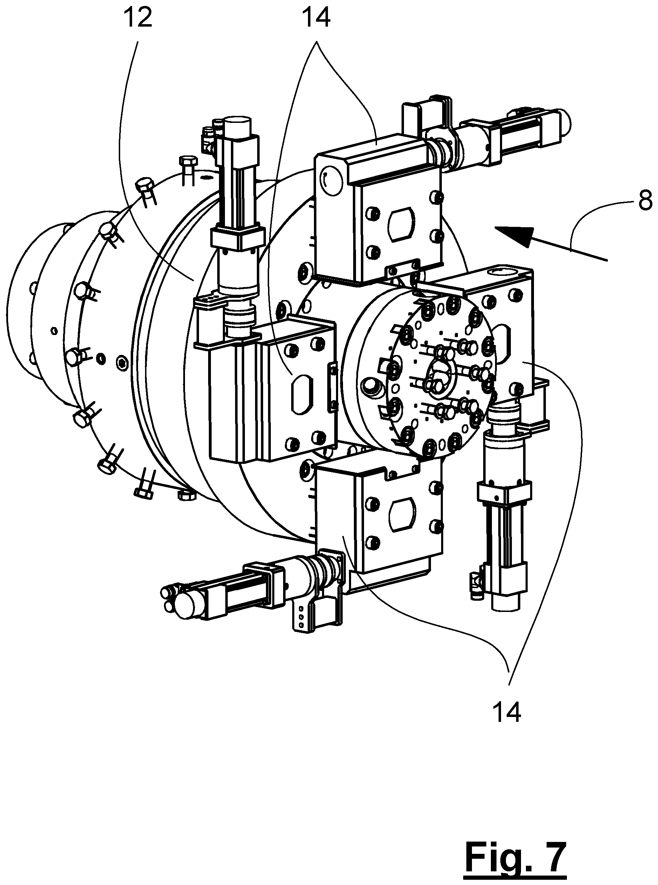

Figur 7zeigt eine perspektivische Ansicht des Extrusionswerkzeuges 2 mit der Extrusionsrichtung 8. Die elektromechanischen Antriebe 14, hier in dem Ausführungsbeispiel sind vier Antriebe 14 dargestellt. Für eine dreidimensionale Verstellung entlang der kugelförmigen Gleitflächen 17 wären sogar drei der Antriebe 14 ausreichend. Können die Antriebe ziehen und schieben, wären sogar zwei Antriebe ausreichend. Wie bereits beschrieben, bewirken die Antriebe 14 hier ein verschieben der Bolzen 13, diese wiederum verdrehen das Verstellelement 12 um dem Mittelpunkt 22 der kugelförmigen Gleitfläche 17 des Gleitblockes 19, was wiederum das Verstellen der Hülse 10 zum Dorn 11 bewirkt, wodurch der Austrittsspalt 18 des Schmelzekanals 9 in seiner Geometrie verändert wird.

Das Extrusionswerkzeug 2 umfasst somit eine erfindungsgemäße elektromechanische Zentrierung. Das hat den Vorteil, dass kein Personal zur manuellen Zentrierung notwendig ist. Für den Bediener ist die exakte Zentrierposition im Bedienfeld der Anlagensteuerung sichtbar, da anhand der durchgeführten Bewegungen der elektromechanischen Antriebe 14 die Verstellung der Hülse 10 ermittelt wird. Eine wiederholgenaue Zentrierung mit hoher Genauigkeit ist so möglich. Es können auch Programme für die Zentrierposition erstellt werden, eine automatische Zentrierung mit stufenloser Wandstärkenkontrolle wird so möglich.

### Bezugszeichenliste:

- 1: Extruder
- 2: Extrusionswerkzeug
- 3: Kalibrier- und Kühlstation
- 4: Abzugsvorrichtung
- 5: Trennvorrichtung
- 6: Endlosprofil
- 7: Extrusionsachse
- 8: Extrusionsrichtung
- 9: Schmelzekanal
- 10: Hülse
- 11: Dorn
- 12: Verstellelement
- 13: Bolzen
- 14: Antrieb für 13
- 15: Federpaket
- 16: Komponente zum Vorspannen von 15
- 17: Gleitfläche
- 18: Austrittsspalt
- 19: Gleitblock
- 20: Mittelachse von 11
- 21: Mittelachse von 10
- 22: Kugelmittelpunkt
- x, y, z -: Fadenkreuz

## Patentansprüche

1. Vorrichtung zur Herstellung von Kunststoffrohren im Extrusionsverfahren mit einem Extruder (1), einem sich in Produktionsrichtung an den Extruder anschließenden Extrusionswerkzeug (2) bestehend aus einem Grundwerkzeug und einem daran anschließenden formgebenden Düseneinsatz mit mindestens einer Hülse (10) und einem Dorn (11), wobei sich zwischen dem Dorn (11) und der Hülse (10) ein Schmelzekanal (9) mit einem kreisförmigen Austrittsspalt (18) bildet, wobei die Hülse (10) relativ zum Dorn (11) verstellbar ist, wobei ein Verstellelement (12) der Vorrichtung angeordnet ist, das mit der Hülse (10) in Wirkverbindung steht und über mindestens einen Antrieb (14) verstellbar ist, wobei das Verstellelement (12) mit einem Gleitblock (19) mit einer kugelförmigen Gleitfläche (17) in Berührung steht, wobei zwischen dem Antrieb (14) und dem Verstellelement (12) ein Bolzen (13) angeordnet ist, **dadurch gekennzeichnet, dass** der Antrieb (14) ein elektromechanischer Antrieb ist, wobei der Antrieb (14) ein Spindelhubgetriebe ist.

2. Vorrichtung nach Anspruch 1, **dadurch gekennzeichnet, dass** ein Federpaket (15) zum Vorspannen des Verstellelementes (12) vorgesehen ist.

3. Vorrichtung nach Anspruch 1 oder 2, **dadurch gekennzeichnet, dass** mittels des Antriebes (14) das Verstellelement (12) und damit die Hülse (10) um einen Kugelmittelpunkt (22) des Gleitblockes (19) mit der kugelförmigen Gleitfläche (17) bewegbar ist.

4. Verfahren zum Verstellen einer Hülse (10) in einem Extrusionswerkzeug (2) mittels einer Vorrichtung nach einem der Ansprüche 1 bis 3, wobei die Hülse (10) aus der konzentrischen Lage bewegt wird, wobei ein Austrittsspalt (18) am Ende des Schmelzekanals (9) verändert wird, **dadurch gekennzeichnet, dass** ein Verstellelement (12) entlang einer kugelförmigen Gleitfläche (17) eines Gleitblockes (19) bewegt wird, wobei ein Antrieb (14) direkt oder indirekt gegen das Verstellelement (12) drückt.

5. Verfahren nach Anspruch 4, **dadurch gekennzeichnet, dass** das Verstellelement (12) eine Ausgangsstellung in Bezug auf den Gleitblock (19) einnimmt, wobei diese Ausgangsstellung durch mindestens einem angeordnetem Federpaket (15) gehalten wird, wobei mittels Komponenten zum Vorspannen (16) die Vorspannung des Federpaketes (15) eingestellt wird, wobei die Vorspannung so eingestellt wird, dass das Verstellelement (12) auf der kugelförmigen Gleitfläche (17) gleiten kann, wobei die Vorspannung so eingestellt wird, dass die kugelförmige Gleitfläche (17) zwischen Verstellelement (12) und dem Gleitblock (19) schmelzedicht ist.

6. Verfahren nach mindestens einem der Ansprüche 4 oder 5, **dadurch gekennzeichnet, dass** über die Stellung der Antriebe (14) die Lage der Hülse (10) zum Dorn (11) bestimmt wird und darüber die Geometrie des Austrittspaltes (18) ermittelt wird.

7. Verfahren nach einem der Ansprüche 4 bis 6, **dadurch gekennzeichnet, dass** in Verbindung mit einer automatischen Wanddickenmessung ein Regelkreis bestimmt wird, der die Wanddicke eines erzeugten Kunststoffrohres kontinuierlich optimiert.

## Claims

1. Device for producing plastic pipes in an extrusion process by way of an extruder (1), an extrusion die (2) attached to the extruder in the production direction, consisting of a basic die and an attached shaping nozzle insert with at least one sleeve (10) and one mandrel (11), whereby the area between the mandrel (11) and the sleeve (10) forms a melt channel (9) with a circular outlet gap (18), whereby the sleeve (10) is adjustable relative to the mandrel (11), whereby an adjustment element (12) of the device is arranged so that it is in an effective connection with the sleeve (10) and adjustable via at least one drive (14), whereby the adjustment element (12) is in contact with a sliding block (19) with a spherical sliding surface (17), whereby between the drive (14) and the adjustment element (12) there is a bolt (13), **characterised in that** the drive (14) is an electromechanical drive, whereby the drive (14) is a spindle lifting gear.

2. Device as per claim 1 **characterised in that** a compound spring (15) is intended for pre-tensioning the adjustment element (12).

3. Device as per claim 1 or 2, **characterised in that** the drive (14) can move the adjustment element (12) and with it the sleeve (10) around the centre of a sphere (22) of the sliding block (19) by way of the spherical sliding surface (17).

4. Process for adjusting a sleeve (10) in an extrusion die (2) by means of a device as per one of the claims 1 to 3, whereby the sleeve (10) is moved out of the concentric position, whereby an outlet gap (18) at the end of the melt channel (9) is modified, **characterised in that** an adjustment element (12) is moved along a spherical sliding surface (17) of a sliding block (19) whereby a drive (14) pushes directly or indirectly against the adjustment element (12).

5. Process as per claim 4, **characterised in that** the adjustment element (12) takes up an initial position in relation to the sliding block (19), whereby this initial position is maintained by a minimum of one arranged compound spring (15), whereby components for pre-tensioning (16) are used to adjust the pre-tension of the compound spring (15), whereby the pre-tension is adjusted so that the adjustment element (12) can glide on the spherical sliding surface (17), whereby the pre-tension is adjusted so that the spherical sliding surface (17) between the adjustment element (12) and the sliding block (19) is melt-tight.

6. Process as per at least one of claims 4 or 5, **characterised in that** the position of the drives (14) defines the position of the sleeve (10) in relation to the mandrel (11) and this is used to determine the geometry of the outlet gap (18).

7. Process as per one of the claims 4 to 6, **characterised in that**, in conjunction with automatic wall thickness measurement, a control loop is determined, which continuously optimises the wall thickness of a produced plastic pipe.

## Revendications

1. Dispositif pour la fabrication de tubes en matière plastique par extrusion, comprenant une extrudeuse (1), une filière d'extrusion (2) raccordée à l'extrudeuse dans le sens de la production, composé d'un outil de base et d'un insert de filière de formage raccordé à celui-ci avec au moins une douille (10) et un mandrin (11), un canal de fusion (9) avec une fente de sortie circulaire (18) se formant entre le mandrin (11) et la douille (10), la douille (10) étant réglable par rapport au mandrin (11), un élément de réglage (12) du dispositif étant disposé, qui est en liaison active avec la douille (10) et qui est réglable via au moins un entraînement (14), l'élément de réglage (12) étant en contact avec un bloc coulissant (19) avec une surface de glissement sphérique (17), un boulon (13) étant disposé entre l'entraînement (14) et l'élément de réglage (12), **caractérisé en ce que** l'entraînement (14) est un entraînement électromécanique, l'entraînement (14) étant un engrenage à vis.

2. Dispositif selon la demande 1, **caractérisé en ce qu'**un ensemble à ressort (15) est prévu pour précontraindre l'élément de réglage (12).

3. Dispositif selon la demande 1 ou 2, **caractérisé en ce que**, grâce à l'entraînement (14), l'élément de réglage (12) et donc la douille (10) peuvent être déplacés autour d'un centre de sphère (22) du bloc coulissant (19) avec la surface de glissement sphérique (17).

4. Procédé pour régler une douille (10) dans une filière d'extrusion (2) à l'aide d'un dispositif selon l'une des demandes 1 à 3, dans lequel la douille (10) est déplacée hors de sa position concentrique, ce qui modifie une fente de sortie (18) à l'extrémité du canal de fusion (9), **caractérisé en ce qu'**un élément de réglage (12) est déplacé le long d'une surface de glissement sphérique (17) d'un bloc coulissant (19), un entraînement (14) appuyant directement ou indirectement contre l'élément de réglage (12).

5. Procédé selon la demande 4, **caractérisé en ce que** l'élément de réglage (12) occupe une position initiale par rapport au bloc coulissant (19), cette position initiale étant maintenue par au moins un ensemble de ressorts (15) disposé, la précontrainte de l'ensemble de ressorts (15) étant réglée à l'aide de composants de précontrainte (16), la précontrainte étant réglée de telle sorte que l'élément de réglage (12) puisse glisser sur la surface de glissement sphérique (17), la précontrainte étant réglée de telle sorte que la surface de glissement sphérique (17) entre l'élément de réglage (12) et le bloc coulissant (19) soit étanche à la fusion.

6. Procédé selon au moins l'une des demandes 4 ou 5, **caractérisé en ce que** la position de la douille (10) par rapport au mandrin (11) est déterminée par la position des entraînements (14) et que la géométrie de la fente de sortie (18) est déterminée à partir de là.

7. Procédé selon l'une des demandes 4 à 6, **caractérisé en ce qu'**en liaison avec une mesure automatique de l'épaisseur de paroi, un circuit de régulation est déterminé qui optimise en continu l'épaisseur de paroi d'un tube en plastique fabriqué.
